# EUROPÄISCHE PATENTSCHRIFT

(11) **EP 0 738 636 B1**
(45) Veröffentlichungstag und Bekanntmachung des Hinweises auf die Patenterteilung: **03.05.2000**
(21) Anmeldenummer: 96101402.4
(22) Anmeldetag: 01.02.1996
(51) Int. Cl.: B60S 1/52

(54) **Waschdüse für eine Scheibenwaschanlage eines Fahrzeuges**
Spraynozzle for a vehicle window washing installation
Gicleur pour une installation de lavage de vitre d'un véhicule

(30) Priorität: 21.04.1995 DE 19514825
(43) Veröffentlichungstag der Anmeldung: 23.10.1996
(73) Patentinhaber: ITT Automotive Europe GmbH, 60488 Frankfurt am Main (DE)
(72) Erfinder: Egner-Walter, Bruno, D-74976 Heilbronn (DE); Schmid, Eckhardt, D-74336 Brackenheim (DE)
(74) Vertreter: Dreiss, Fuhlendorf, Steimle & Becker, Patentanwälte

(56) Entgegenhaltungen:
- DE-B- 1 047 650
- DE-B- 1 106 622

## Beschreibung

Die Erfindung betrifft ein Fahrzeug mit einer Waschdüse für eine Scheibenwaschanlage gemäß dem Oberbegriff des Anspruchs 1.

Die Erfindung geht aus von einer bekannten Waschdüse für die Scheibenwaschanlage eines Kraftfahrzeuges, bei welcher der eigentliche Düsenkörper und der Schlauchanschlußstutzen als einteiliges Bauteil ausgebildet sind. Eine solche Waschdüse ist beispielsweise aus der DE-A- 25 03 256 bekannt. Derartige Waschdüsen werden an der Außenseite der Fahrzeugkarosserie und dabei zumeist vor der zu reinigenden Windschutzscheibe auf der Motorhaube angebracht. An dem vorgesehenen Anbringungsort für die Waschdüse ist in die Karosserie bzw. Motorhaube ein Durchbruch eingebracht, dessen Querschnitt kleiner ist als die Unterseite des Düsenkörpers, von welchem aus sich der Schlauchanschlußstutzen nach unten erstreckt. Der Düsenkörper wird von der Außenseite her auf die Karosserie bzw. Motorhaube gebracht, wobei der Schlauchanschlußstutzen durch den Durchbruch hindurchgeführt wird. Für die Fixierung des Düsenkörpers an der Karosserie sind zumeist Rastmittel vorgesehen, welche an der Unterseite des Düsenkörpers oder am Schlauchanschlußstutzen angebracht sind und den Rand des Durchbruches in der Karosserie hinterrasten. Im Falle der DE-A- 25 03 256 sind die Rastmittel am Schlauchanschlußstutzen vorgesehen. Im montierten Zustand liegt der Düsenkörper mit seiner Unterseite auf einem den Durchbruch umgebenden Bereich auf der Außenseite der Karosserie bzw. Motorhaube auf, wobei zwischen der Karosserie bzw. Motorhaube und der Unterseite des Düsenkörpers eine Dichtung vorgesehen sein kann.

Die Montage der Waschanlage an das Fahrzeug erfolgt bekanntermaßen beim Autohersteller, wobei an der Innenseite der Karosserie bzw. im Motorraum die zur Waschanlage gehörenden Schlauchleitungen verlegt werden. Dabei werden die jeweils mit einer Waschdüse zu verbindenden Enden der Schlauchleitungen zunächst durch die Durchbrüche in der Karosserie hindurch nach außen geführt. Dann wird an der Außenseite der Karosserie bzw. Motorhaube der Schlauchanschlußstutzen der Waschdüse mit dem Ende der Schlauchleitungen verbunden, und dann wird die Waschdüse in entsprechender Weise an der Fahrzeugkarosserie bzw. der Motorhaube befestigt. Im Falle der DE-A- 25 03 256 ist von oben her noch eine pilzkopfartige Abdeckkappe auf den Düsenkörper aufgerastet, wobei ein Durchbruch in der Abdeckkappe so hinsichtlich der in dem Grundkörper vorgesehenen Spritzöffnung ausgerichtet ist, daß der von der Spritzöffnung ausgehende Waschflüssigkeitsstrahl durch diesen Durchbruch hindurchtreten kann.

Die DE-B-11 06 622 offenbart eine Waschdüse, die im wesentlichen aus den separaten Bauteilen, wie Düsengrundkörper und Schlauchanschlußstutzen besteht. Der Düsengrundkörper ist dabei an der Karosserie bzw. Motorhaube des Fahrzeugs befestigt ist und der Schlauchanschlußstutzen ist flüssgkeitsdicht mit dem Düsengrundkörper verbunden. Eine Verbindungsstelle einer Schlauchleitung mit dem Schlauchanschlußstutzen liegt an der Innenseite der Karosserie bzw. Motorhaube.

Nachteilig an Waschdüsen dieser bekannten Art ist, daß sie beim Autohersteller in der Fahrzeugendmontage die Durchführung zeitintensiver komplizierter Arbeitsgänge erfordern.

Aufgabe der Erfindung ist es daher, eine Waschdüse für eine Scheibenwaschanlage eines Fahrzeuges so auszubilden, daß eine Vereinfachung der Montage der Waschanlage beim Fahrzeughersteller eintritt.

Erfindungsgemäß wird die Aufgabe durch ein Fahrzeug mit einer Waschdüse mit den Merkmalen des Anspruchs 1 gelöst.

Der Grundgedanke der Erfindung besteht darin, den Düsenkörper und den Schlauchanschlußstutzen einer Waschdüse nunmehr zweiteilig, das heißt als zwei separate Bauteile, auszubilden, welche in einfacher Weise rastend und flüssigkeitsdicht miteinander verbindbar sind.

Eine derartige Ausbildung der Waschdüse ermöglicht eine wesentliche Vereinfachung des Montagevorganges in der Fahrzeugendmontage beim Autohersteller. Nunmehr ist es möglich, unabhängig voneinander den Schlauchanschlußstutzen der Waschdüse mit dem entsprechenden Ende der zugehörigen Schlauchleitung zu verbinden und andererseits den Düsenkörper bereits an der Außenseite der Karosserie bzw. Motorhaube des Fahrzeuges zu befestigen. Nunmehr wird nur noch der separate Schlauchanschlußstutzen mit angeschlossener Waschleitung mit den zugehörigen Düsenkörpern verbunden, was ganz einfach durch rastendes Hineinpressen des Schlauchanschlußstutzens in die entsprechende Aufnahme am Düsenkörper erfolgt.

Als besonders vorteilhaft ist hierbei eine Ausgestaltung gemäß Anspruch 10 zu empfehlen, wonach vorgesehen ist, daß der separate Schlauchanschlußstutzen und die zugehörige Schlauchleitung bereits miteinander verbunden als vorgefertigte Baueinheit beim Autohersteller vorliegt und somit nach dem Verlegen der Schlauchleitung und dem Befestigten des Düsenkörpers an der Karosserie bzw. Motorhaube lediglich der Schlauchanschlußstutzen rastend mit dem Düsenkörper zu verbinden ist.

Eine vorteilhafte Weiterbildung der Erfindung sieht vor, daß der Schlauchanschlußstutzen an denjenigem Ende welches mit dem Düsenkörper zu verbinden ist, einen verdickten Anschlußkopf besitzt und daß demgegenüber der Düsenkörper an seiner Unterseite eine dem Anschlußkopf angepaßte Ausnehmung besitzt, welche so ausgebildet ist, daß der Anschlußkopf des Schlauchanschlußstutzens rastend und flüssigkeitsdicht aufnehmbar ist. Dabei ist außerdem vorgesehen, daß ein in dem Düsenkörper angebrachter Flüssigkeitskanal, der zu einer Spritzöffnung der Waschdüse führt, derart in die Ausnehmung zur Aufnahme des Anschlußkopfes einmündet, daß die durch den Schlauchanschlußstutzen zu fördernde Waschflüssigkeit ungehindert in diesen Flüssigkeitskanal gelangen kann.

Weitere vorteilhafte Ausgestaltungen und Einzelheiten der Erfindung sind in den nachfolgenden Ausführungsbeispielen anhand der Zeichnung näher beschrieben. In den zugehörigen Zeichnungen zeigen:
- Fig. 1: in Schnittdarstellung eine an der Motorhaube eines Kraftfahrzeuges installierte Waschdüse,
- Fig. 2: in Schnittdarstellung ein Ausführungsbeispiel des Anschlußkopfes eines Schlauchanschlußstutzens,
- Fig. 3: in Schnittdarstellung ein anderes Ausführungsbeispiel des Anschlußkopfes eines Schlauchanschlußstutzens und
- Fig. 4: in Schnittdarstellung ein weiteres Ausführungsbeispiel des Anschlußkopfes eines Schlauchanschlußstutzens.

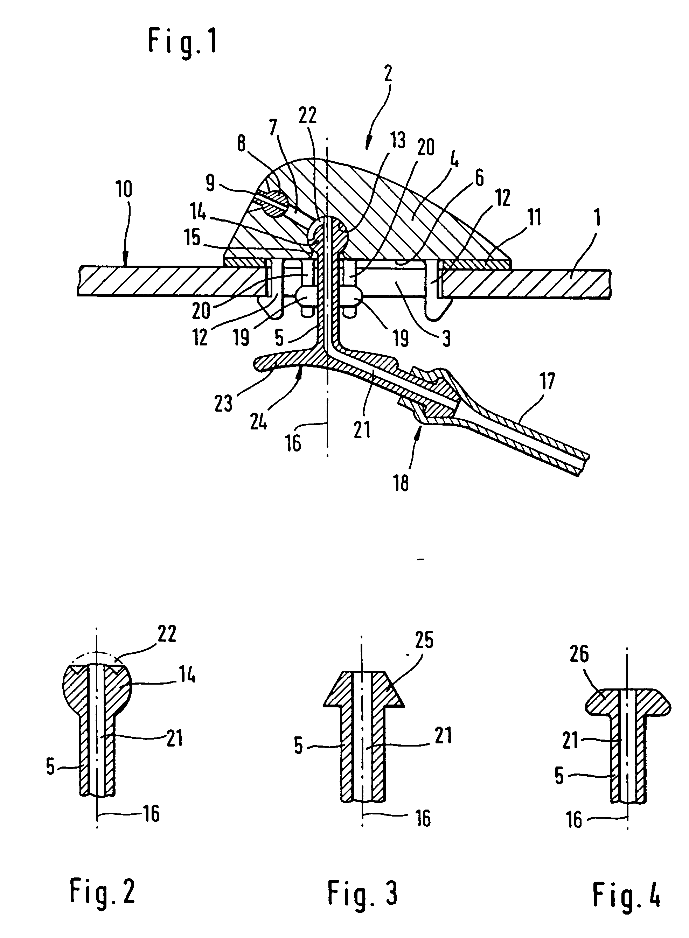

In Fig. 1 ist ein Ausschnitt einer Motorhaube 1 zu erkennen, in welche an einem vorgesehenen Befestigungsort für eine Waschdüse 2 ein Durchbruch 3 eingebracht ist. Die Waschdüse 2 ist zweiteilig ausgeführt und ist aus einem Düsenkörper 4 und einem Schlauchanschlußstutzen 5 zusammengesetzt. Der Düsenkörper 4 selbst besitzt eine im wesentlichen ebene Unterseite 6, und in seinem Inneren ist ein Flüssigkeitskanal 7 ausgebildet, dessen Austrittsseite trichterförmig erweitert ist. An der Austrittsseite dieses Flüssigkeitskanals 7 ist eine Spritzkugel 8 räumlich verschwenkbar gelagert, welche eine Spritzöffnung 9 aufweist. Die Unterseite 6 des Düsenkörpers 4 ist größer als der Querschnitt des Durchbruches 3 in der Motorhaube 1. Deshalb kann der Düsenkörper 4 mit seiner Unterseite 3 in einem den Durchbruch 3 umgebenden Bereich auf der Außenseite 10 der Motorhaube aufliegen, wobei eine Dichtung 11 zwischen die Auflagefläche der Unterseite 6 des Düsenkörpers 4 und der Motorhaube 1 eingebracht ist. Es sind weiterhin Rastelemente 12 zu erkennen, welche an die Unterseite 6 des Düsenkörpers 4 angeformt sind und durch den Durchbruch 3 hindurchragen und den inneren Rand des Durchbruches 3 hinterrasten. Dadurch wird der Düsenkörper 4 sicher an dem vorbestimmten Befestigungsort an der Motorhaube 1 gehalten.

Etwa mittig ist eine zur Unterseite 6 hin geöffnete Ausnehmung 13 in den Düsenkörper 4 eingebracht. Diese Ausnehmung 13 ist kugelig ausgebildet und somit an die kugelige Gestalt des Anschlußkopfes 14 angepaßt, welcher an dem mit dem Düsenkörper 4 rastend zu verbindenden Ende des Schlauchanschlußstutzens 5 ausgebildet ist. Die Ausnehmung 13 ist in der Nähe ihrer Öffnung mit einem umlaufenden, gegenüber dem größten Durchmesser der Ausnehmung verjüngten Rand versehen, welcher geeignet ist, als umlaufender Rastvorsprung 15 mit dem kugeligen Anschlußkopf 14 zusammenzuwirken und diesen flüssigkeitsdicht in der Ausnehmung 13 zu halten. Ausgehend von dem umlaufenden Rastvorsprung 15 ist die Ausnehmung 13 in Richtung zur Unterseite 6 des Düsenkörpers 4 hin trichterförmig erweitert. Dieses dient zum einen dazu, den Anschlußkopf 14 bei seinem Montageprozeß zu zentrieren und seine Einführung in die Ausnehmung 13 zu erleichtern, andererseits wird damit auch eine Verschwenkbarkeit des Schlauchanschlußstutzens 5 gegenüber einer gedachten Achse 16 gewährleistet, welche senkrecht zu der Unterseite 6 des Düsenkörpers 4 verläuft.

Der Schlauchanschlußstutzen 5 ist etwa mittig zwischen dem kugeligen Anschlußkopf 14 und seinem gegenüberliegenden Ende, an welchem die Schlauchleitung 17 angeschlossen ist, abgewinkelt. Die Schlauchanschlußstelle 18 ist somit in eine Richtung orientiert, welche dem Verlauf der am Fahrzeug installierten Schlauchleitung 17 angepaßt ist. Um diese angestrebte Vorzugsrichtung, in welche die Schlauchanschlußstelle 18 weist, zu fixieren, ist der Schlauchanschlußstutzen 5 in der Nähe des Anschlußkopfes 14 mit seitlich abstehenden Anschlägen 19 ausgestattet, welche mit von der Unterseite 6 des Düsenkörpers 4 nach unten abstehenden Anschlägen 20 zusammenwirken. Diese Anschläge 19 und 20 verhindern ein Verdrehen des Schlauchanschlußstutzens 5 um die gedachte Achse 16, andererseits lassen sie aber eine Verschwenkung des Anschlußstutzens 5 gegenüber der gedachten Achse 16 in der Ebene des Zeichnungsblattes zu. Diese Verschwenkbarkeit ermöglicht es, daß der Schlauchanschlußstutzen 5 bzw. die Schlauchleitung 17 in universeller Art und Weise verschiedene Winkellagen gegenüber der Unterseite 6 des Düsenkörpers 4 einnehmen kann.

Damit auch bei allen möglichen Winkellagen, welche der Schlauchanschlußstutzen 5 gegenüber der Unterseite 6 des Düsenkörpers 4 einnehmen kann ein ungehindertes Überströmen der durch den Kanal 21 des Schlauchanschlußstutzens 5 geförderten Waschflüssigkeit in den Flüssigkeitskanal 7, der in die Ausnehmung 13 einmündet, gewährleistet ist, ist in den Anschlußkopf 14 im Bereich des Austrittes des Kanales 21 eine flächige Ausnehmung 22 eingebracht. Diese Ausnehmung 22 bildet mit der Innenseite der Ausnehmung 13 im Düsenkörper 4 einen Freiraum, in welchen sowohl der Kanal 21 des Schlauchanschlußstutzens 5 als auch der Flüssigkeitskanal 7 des Düsenkörpers 4 einmündet und welcher somit ein ungehindertes Überströmen der Waschflüssigkeit bei verschiedenen Winkellagen des Schlauchanschlußstutzens 5 gewährleistet. Hierzu wäre auch eine andere Ausführung denkbar, bei welcher der kugelige Anschlußkopf 14 voll ausgebildet ist und die Ausnehmung 22 dafür in dem Düsenkörper 4 vorgesehen ist.

In Fig. 1 ist noch erkennbar, daß der Schlauchanschlußstutzen 5 im Bereich seiner Abwinkelung einen seitlich abstehenden Ansatz 23 besitzt, der quer zu dem oberen Teil des Schlauchanschlußstutzens 5 verläuft. Dieser Ansatz 23 ist dazu bestimmt, die Handhabung des Schlauchanschlußstutzens 5 bei seiner Montage an den Düsenkörper 4 zu verbessern. Bei der Montage des Schlauchanschlußstutzens 5 muß dieser in Längsrichtung seines oberen Teiles in die Ausnehmung 13 des Düsenkörpers 4 hineingedrückt werden. Dazu ist ein bestimmter Kraftaufwand erforderlich. Um diese Kraft günstig auf den Schlauchanschlußstutzen 5 ausüben zu können, bildet der Ansatz 23 eine günstige Angriffsmöglichkeit für diese Kraft. Vorteilhaft ist es, wenn dieser Ansatz 23 flächenhaft ausgebildet ist und somit eine Druckfläche 24 aufweist, auf welche mit einem Finger bzw. mit dem Daumen einer menschlichen Hand der entsprechende Druck ausgeübt werden kann.

Aus Fig. 2 ist ein kugelig geformter Anschlußkopf 14 eines Schlauchanschlußstutzens 5 ersichtlich, bei welchem eine flächige Ausnehmung 22 eingeformt ist, welche sich allseits um den Austritt des Kanales 21 herum erstreckt. Diese Ausführung hat den besonderen Vorteil einer universellen Anwendbarkeit hinsichtlich verschiedener geometrischer Verhältnisse verschiedener Fahrzeuge, an denen die erfindungsgemäße Waschdüse 2 zur Anwendung vorgesehen ist. Der in Fig. 2 dargestellte Anschlußkopf 14 gewährleistet eine vollständige Funktionsfähigkeit auch bei verschiedenen um die gedachte Achse 16 verdrehten oder gegenüber der Achse 16 räumlich verschwenkten Positionen des Schlauchanschlußstutzens 5.

In Fig. 3 ist ein Schlauchanschlußstutzen 5 mit einem kegelstumpfförmigen Anschlußkopf 25 gezeigt. Dieser Anschlußkopf 25 ist besonders gut geeignet, flüssigkeitsdicht von einer entsprechend angepaßten Ausnehmung_13 eines Düsenkörpers 4 aufgenommen zu werden. Hierbei wird auf den besonderen Vorteil der räumlichen Verschwenkbarkeit des Schlauchanschlußstutzens 5 verzichtet, wodurch die Universalität bezüglich der möglichen Positionen des Schlauchanschlußstutzens 5 gegenüber der gedachten Achse 16 fehlt. Bestenfalls ist der Schlauchanschlußstutzen 5 mit dem Anschlußkopf 25 um die Achse 16 drehbar. Die kegelstumpfförmige Gestalt des Anschlußkopfes 25 führt zu einer besonders festen rastenden Verbindung mit dem Düsenkörper 4, welche kaum wieder lösbar ist. Demzufolge wird eine Anwendung dieses Anschlußkopfes 25 in solchen Fällen vorgesehen, in denen der Schlauchanschlußstutzen ständig am Düsenkörper 4 verbleiben soll. Bei einer eventuell erforderlichen Demontage der Waschanlage müßte in diesem Fall die Schlauchleitung 17 von dem Schlauchanschlußstutzen 5 gelöst werden.

In dem Ausführungsbeispiel gemäß Fig. 4 besitzt der Anschlußkopf 26 des Schlauchanschlußstutzens 5 eine wulstartige Gestalt, die sich in Richtung des Austritts des Kanales 21 ähnlich dem Anschlußkopf 25 von Fig. 3 verjüngt. Ansonsten ist die Kontur des in Fig. 4 dargestellten Schnittes des Anschlußkopfes 26 weitgehend gerundet. Diese gerundete Gestalt des Anschlußkopfes 26 ermöglicht es, den Anschlußkopf 26 im Bedarfsfall aus seinem Sitz in einer seiner Form angepaßten Ausnehmung 13 eines Düsenkörpers 4 wieder herauszulösen. Ansonsten ist noch zu bemerken, daß auch der Schlauchanschlußstutzen 5 mit dem Anschlußkopf 26 im wesentlichen nur um die gedachte Achse 16 drehbar und bestenfalls geringfügig gegenüber der Achse 16 verschwenkbar ist.

### Bezugszeichenliste

- 1: Motorhaube
- 2: Waschdüse
- 3: Durchbruch
- 4: Düsenkörper
- 5: Schlauchanschlußstutzen
- 6: Unterseite
- 7: Flüssigkeitskanal
- 8: Spritzkugel
- 9: Spritzöffnung
- 10: Außenseite
- 11: Dichtung
- 12: Rastelement
- 13: Ausnehmung
- 14: (kugeliger) Anschlußkopf
- 15: (umlaufender) Rastvorsprung
- 16: gedachte Achse
- 17: Schlauchleitung
- 18: Schlauchanschlußstelle
- 19: Anschlag
- 20: Anschlag
- 21: Kanal
- 22: Ausnehmung
- 23: Ansatz
- 24: Druckfläche
- 25: (kegelstumpfförmiger) Anschlußkopf
- 26: (wulstartiger) Anschlußkopf

## Patentansprüche

1. Fahrzeug mit einer Waschdüse für eine Scheibenwaschanlage, insbesondere Kraftfahrzeug, wobei die Waschdüse (2) im wesentlichen aus den separaten Bauteilen Düsengrundkörper (4) und Schlauchanschlußstutzen (5) besteht, der Düsengrundkörper (4) an der Karosserie bzw. Motorhaube (1) des Fahrzeuges befestigt ist und der Schlauchanschlußstutzen (5) flüssigkeitsdicht mit dem Düsengrundkörper (4) verbunden ist, wobei eine Verbindungsstelle (18) einer Schlauchleitung (17) mit dem Schlauchanschlußstutzen (5) an der Innenseite der Karosserie bzw. Motorhaube (1) liegt, **dadurch gekennzeichnet,** daß der Düsengrundkörper (4) im wesentlichen an der Außenseite (10) der Karosserie bzw. Motorhaube (1) des Fahrzeuges angeordnet ist und der Schlauchanschlußstutzen (5) durch einen Durchbruch in der Karosserie bzw. Motorhaube (1) derartig hindurchragt, daß er an der Außenseite der Karosserie bzw. Motorhaube (1) rastend und flüssigkeitsdicht mit dem Düsengrundkörper (4) verbunden ist.

2. Fahrzeug nach Anspruch 1, **dadurch gekennzeichnet,** daß der Schlauchanschlußstutzen (5) an dem mit dem Düsengrundkörper (4) zu verbindenden Ende einen verdickten Anschlußkopf (14, 25, 26) besitzt und daß der Düsengrundkörper (4) an seiner Unterseite (6) eine dem Anschlußkopf (14, 25, 26) angepaßte Ausnehmung (13) zur rastenden Aufnahme des Anschlußkopfes (14, 25, 26) besitzt, in welche ein Flüssigkeitskanal (7) einmündet, der zu einer Spritzöffnung (9) der Waschdüse (2) führt.

3. Fahrzeug nach einem der vorhergehenden Ansprüche, **dadurch gekennzeichnet**, daß der Schlauchanschlußstutzen (5) zumindest in begrenztem Maße um eine gedachte, senkrecht zu der Unterseite (6) des Düsengrundkörper (4) verlaufende Achse (16) verdrehbar und/oder gegenüber dieser Achse (16) verschwenkbar ist, insbesondere räumlich verschwenkbar.

4. Fahrzeug nach einem der Ansprüche 1 bis 2, **dadurch gekennzeichnet,** daß an dem Düsengrundkörper (4) und an dem Schlauchanschlußstutzen (5) Haltemittel vorgesehen sind, welche den Schlauchanschlußstutzen (5) in einer Vorzugslage an dem Düsengrundkörper (4) halten.

5. Fahrzeug nach Anspruch 4, **dadurch gekennzeichnet,** daß die Haltemittel am Düsengrundkörper (4) befestigte Anschläge (20) und am Schlauchanschlußstutzen (5) befestigte Anschläge (19) sind, welche gegenseitig in Wirkverbindung stehen.

6. Fahrzeug nach einem der vorhergehenden Ansprüche, **dadurch gekennzeichnet,** daß der Schlauchanschlußstutzen (5) an geeigneter Stelle zwischen seinen beiden Enden abgebogen oder abgewinkelt ist.

7. Fahrzeug nach einem der vorhergehenden Ansprüche, **dadurch gekennzeichnet,** daß der Schlauchanschlußstutzen (5) einen von ihm abstehenden Ansatz (23) besitzt, der im wesentlichen quer zur der Richtung verläuft, in welcher der Schlauchanschlußstutzen (5) zur Herstellung der rastenden Verbindung mit dem Düsengrundkörper (4) bewegt werden muß.

8. Fahrzeug nach einem der vorhergehenden Ansprüche, **dadurch gekennzeichnet,** daß der Anschlußkopf (14, 25, 26) des Schlauchanschlußstutzens (5) kugelförmig oder konisch oder wulstartig oder dergleichen ausgebildet ist und die Ausnehmung (13) im Düsengrundkörper (4) eine mit dem Anschlußkopf (14, 25, 26) korresporrendierende Form aufweist, so daß der Rand der Ausnehmung (13) den Anschlußkopf (14, 25, 26) rastend umgreifen kann.

9. Fahrzeug, nach Anspruch 8, wobei der Anschlußkopf (14) des Schlauchanschlußstutzens (5) kugelförmig ausgebildet ist, **dadurch gekennzeichnet,** daß in der Umgebung des Austritts des Kanales (21) in den kugelförmigen Anschlußkopf (14) eine flächenhafte, flache Ausnehmung (22) eingebracht ist, welche im Zusammenwirken mit der Innenfläche der Ausnehmung (13) im Düsengrundkörper (4) einen Freiraum für den Durchtritt von Waschflüssigkeit bildet.

10. Fahrzeug nach einem der vorhergehenden Ansprüche,
**dadurch gekennzeichnet,** daß der separate Schlauchanschlußstutzen (5) mit einer Schlauchleitung (17) zu einer vorgefertigten Baueinheit verbunden ist und diese vorgefertigte Baueinheit mit einem bereits an der Karosserie bzw. Motorhaube (1) des Fahrzeuges angebrachten Düsengrundkörper (4) rastend verbunden worden ist.

## Claims

1. Vehicle having a spray nozzle for a window washing installation, in particular a motor vehicle, wherein the spray nozzle (2) consists essentially of two separate components, a nozzle base body (4) and a hose connector piece (5), with the nozzle base body (4) being connected to the vehicle body or the engine hood (1) of the vehicle and with the hose connector piece (5) being connected to the nozzle base body (4) in a liquid tight fashion, wherein a connection location (18) for a hose conduit (17) to the hose connector (5) is situated on the inside of the vehicle body or the engine hood (1), **characterized in that** the nozzle body (4) is disposed substantially on the outer side (10) of the vehicle body or the engine hood (1) of the vehicle and the hose connector piece (5) projects through an opening in the vehicle body or the engine hood (1) in such a fashion that it is connected to the nozzle base body (4) at the outer side of the vehicle body or the engine hood (1) in a latched and liquid-tight fashion.

2. Vehicle according to claim 1, **characterized in that** the hose connector piece (5) has a thickened connector head (14, 25, 26) at that end which is to be connected to the nozzle base body (4) and the nozzle base body (4) has a receptacle (13) at its lower side (6), adapted to the connector head (14, 25, 25) for latching acceptance of the connector head (14, 25, 26), into which a liquid channel (7) feeds which leads to a spray opening (9) of the spray nozzle (2).

3. Vehicle according to any one of the preceding claims, **characterized in that** the hose connector piece (5) can, at least to a limited extent, rotate about an imaginary axis (16) extending perpendicular to the lower side (6) of the nozzle base body (4) and/or can be pivoted relative to this axis (16), in particular spatially pivoted.

4. Vehicle according to either one of the claims 1 or 2, **characterized in that** holding means are provided on the nozzle base body (4) and on the hose connector piece (5) which hold the hose connector piece (5) in a preferred location on the nozzle base body (4).

5. Vehicle according to claim 4, **characterized in that** the holding means are abutments (20) attached to the nozzle base body (4) and abutments (19) attached to the hose connector piece (5) which act in mutual cooperation with each other.

6. Vehicle according to any one of the preceding claims, **characterized in that** the hose connector piece (5) is angled or curved at a suitable location between its two ends.

7. Vehicle according to any one of the preceding claims, **characterized in that** the hose connector piece (5) has a protruding shoulder (23) which extends substantially transverse to the direction in which the hose connector piece (5) must be moved to establish the latching connection to the nozzle base body (4).

8. Vehicle according to any one of the preceding claims, **characterized in that** the connector head (14, 25, 26) of the hose connector piece (5) is spherical in shape or conical in shape or beaded or configured in a similar fashion and the receptacle (13) in the nozzle base body (4) has a shape corresponding to the connector head (14, 25, 26) so that the edge of the receptacle (13) can latchingly engage about the connector head (14, 15, 26).

9. Vehicle according to claim 8, wherein the connector head (14) of the hose connector piece (5) is configured in a spherical fashion, **characterized in that** a flat recess (22) is introduced into the spherically shaped connector head (14) over a large area proximate the channel (21) outlet which forms, in cooperation with the inner surface of the receptacle (13) in the nozzle base body (4), a free space for the passage of washing liquid.

10. Vehicle according to any one of the preceding claims, **characterized in that** the separate hose connector piece (5) is connected to a hose conduit (17) to form a prefabricated component and this prefabricated component is latchingly connected to a nozzle base body (4) which has been previously mounted to the vehicle body or engine hood (1) of the vehicle.

## Revendications

1. Véhicule muni d'un gicleur de lave-glace pour une installation de lave-glace, en particulier un véhicule automobile, où le gicleur de lave-glace (2) est pour l'essentiel composé des composants séparés de corps de base (4) du gicleur et d'une tubulure (5) de raccordement du flexible, le corps de base (4) du gicleur étant fixé sur la carrosserie, voire sur le capot moteur (1) du véhicule, et la tubulure (5) de raccordement du flexible étant reliée de façon étanche aux liquides au corps de base (4) du gicleur, un point de liaison (18) entre un tuyau flexible (17) et la tubulure (5) de raccordement du flexible se situant du côté intérieur de la carrosserie, voire du capot moteur (1),
caractérisé en ce que le corps de base (4) du gicleur est pour l'essentiel disposé du côté extérieur (10) de la carrosserie, voire du capot moteur (1) du véhicule, et que la tubulure (5) de raccordement du flexible se projette à travers un percement ménagé dans la carrosserie, voire le capot moteur (1), de manière telle qu'elle se raccorde par encliquetage et de façon étanche aux liquides au corps de base (4) du gicleur, à la face extérieure de la carrosserie, voire du capot moteur (1).

2. Véhicule selon la revendication 1, caractérisé en ce que la tubulure (5) de raccordement du flexible possède, à l'extrémité à relier au corps de base (4) du gicleur, une tête de raccordement élargie (14, 25, 26), et que le corps de base (4) du gicleur possède, à sa face ventrale (6), un évidement (13) adapté à la tête de raccordement (14, 25, 26), assurant un montage par enclenchement de la tête de raccordement (14, 25, 26), et dans lequel débouche un canal (7) à liquide, qui conduit à un orifice gicleur (9) du gicleur de lave-glace (2).

3. Véhicule selon l'une des revendications précédentes, caractérisé en ce que la tubulure (5) de raccordement du flexible est pivotante, du moins dans une mesure limitée, autour d'un axe imaginaire (16) s'étendant perpendiculairement à la face ventrale (6) du corps de base (4) du gicleur et/ou pivotante par rapport à cet axe, et notamment pivotante dans l'espace.

4. Véhicule selon l'une des revendications 1 à 2, caractérisé en ce que des moyens de retenue sont prévus sur le corps de base (4) du gicleur et sur la tubulure (5) de raccordement du flexible, maintenant la tubulure (5) de raccordement du flexible dans une position préférentielle sur le corps de base (4) du gicleur.

5. Véhicule selon la revendication 4, caractérisé en ce que les moyens de retenue sont constitués de butées (20) fixées sur le corps de base (4) du gicleur et de butées (19) fixées sur la tubulure (5) de raccordement du flexible, qui interagissent les unes avec les autres.

6. Véhicule selon l'une des revendications précédentes, caractérisé en ce que la tubulure (5) de raccordement du flexible est cintrée ou pliée à un endroit approprié entre ses deux extrémités.

7. Véhicule selon l'une des revendications précédentes, caractérisé en ce que la tubulure (5) de raccordement du flexible comporte un épaulement (23) qui s'étend essentiellement perpendiculairement à la direction dans laquelle la tubulure (5) de raccordement du flexible doit être déplacée pour réaliser la liaison par enclenchement avec le corps de base (4) du gicleur.

8. Véhicule selon l'une des revendications précédentes, caractérisé en ce que la tête de raccordement (14, 25, 26) de la tubulure (5) de raccordement du flexible est configurée en forme de sphère, de cône ou de bourrelet ou similaire, et que l'évidement (13) ménagé dans le corps de base (4) du gicleur présente une forme correspondant à celle de la tête de raccordement (14, 25, 26), de sorte que le bord de l'évidement (13) puisse se serrer en s'enclenchant autour de la tête de raccordement (14, 25, 26).

9. Véhicule selon la revendication 8, où la tête de raccordement (14) de la tubulure (5) de raccordement du flexible est configurée en forme de sphère, caractérisé en ce qu'aux alentours de l'embouchure du canal (21), un évidement de surface plat (22) est ménagé, qui, en association avec la surface intérieure de l'évidement (13) ménagé dans le corps de base (4) du gicleur, forme une cavité permettant le passage de liquide de nettoyage.

10. Véhicule selon l'une des revendications précédentes, caractérisé en ce que la tubulure séparée (5) de raccordement du flexible est reliée à un tuyau flexible (17) pour former un ensemble préfabriqué, et que cet ensemble préfabriqué a été relié par encliquetage à un corps de base (4) du gicleur déjà monté sur la carrosserie, voire sur le capot moteur (1) du véhicule.
